# EUROPÄISCHE PATENTSCHRIFT

(11) **EP 2 606 554 B1**
(45) Veröffentlichungstag und Bekanntmachung des Hinweises auf die Patenterteilung: **27.02.2019**
(21) Anmeldenummer: 11736365.5
(22) Anmeldetag: 27.07.2011
(51) Int. Cl.: H02K 1/27, H02K 1/28

(54) **BEFESTIGUNG VON MAGNETEN AN EINEM ROTOR**
MAGNET ROTOR MOUNTING
FIXATION DES AIMANTS SUR UN ROTOR

(30) Priorität: 16.08.2010 DE 102010039334
(43) Veröffentlichungstag der Anmeldung: 26.06.2013
(73) Patentinhaber: Robert Bosch GmbH, 70442 Stuttgart (DE)
(72) Erfinder: KLATTE, Holger, 31141 Hildesheim (DE); KUPKE, Norbert, 29690 Gilten-Nienhagen (DE); NOMMENSEN, Bjoern, 31848 Bad Muender (DE); KRITHARIDOU, Stavroula, 71364 Winnenden (DE); ZERNIKOW, Maik, 31139 Hildesheim (DE); STOERMER, Stefan, 31157 Sarstedt (DE)
(86) Internationale Anmeldenummer: PCT/EP2011/062878
(87) Internationale Veröffentlichungsnummer: WO 2012/022589

(56) Entgegenhaltungen:
- EP-A2- 1 983 634
- WO-A2-2007/004009
- DE-A1- 4 423 840
- JP-A- 2004 357 418

## Beschreibung

### Stand der Technik

Die vorliegende Erfindung betrifft einen Rotor oder Stator für eine elektrische Maschine, der konzentrisch um eine Drehachse angeordnet ist, mit einem Dauermagneten, der in einer Aussparung des Rotors oder Stators angeordnet ist. Die vorliegende Erfindung betrifft weiterhin eine elektrische Maschine sowie eine Handwerkzeugmaschine mit einer elektrischen Maschine mit einem erfindungsgemäßen Rotor oder Stator.

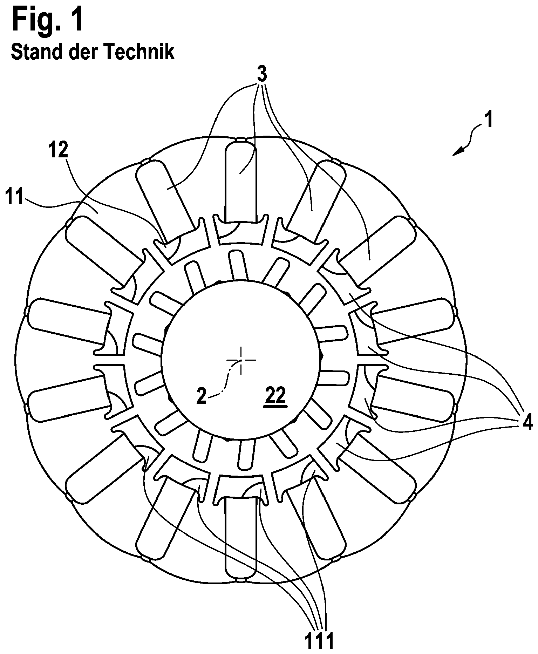

Um einen Dauermagnet in eine Aussparung eines Rotors 1 (s. **Fig. 1**) oder Stators, insbesondere einer Synchronmaschine, zu befestigen, wird dieser herkömmlich in die Aussparung 4 eingepresst und mittels zumindest einer Klemmnase 111 verklemmt. Die Klemmnase ist an der der Drehachse 2 zugewandten Seite des Dauermagneten 3 vorgesehen und fixiert den Dauermagneten nicht nur radial, sondern hält ihn auch axial. Bei dieser Technik ist der Dauermagnet hohen mechanischen Beanspruchungen ausgesetzt und seine Oberfläche und/oder Beschichtung wird häufig, insbesondere beim Einpressen in die Aussparung und/oder unter Betriebsbedingungen des Rotors oder Stators, verkratzt.

Zudem dehnen sich sowohl das Rotorpaket als auch die Dauermagnete über den im Rotor oder Stator herrschenden Temperaturbereich, der beispielsweise im Bereich von -40° - +160°C liegt, unterschiedlich aus. Da die Klemmnase einstückig mit dem Rotorblock beziehungsweise mit Lamellen 12 des Rotorblocks gebildet ist, ermöglicht sie aufgrund des unterschiedlichen Temperaturverhaltens und bei verschiedenen Bauteiltoleranzen des Dauermagneten gegenüber den Lamellen beziehungsweise dem Rotorblock keinen ausreichenden Ausgleich des Temperaturverhaltens und/oder der Bauteiltoleranzen des Dauermagneten.

In D1 (EP 1983634 A2) ist ein Rotor für insbesondere einen Elektromotor einer Umwälzpumpe gezeigt. In dem Rotorpaket des Motors sind Taschen ausgebildet, in die jeweils ein Magnet eingefügt ist. An den Tasche ist jeweils eine parallel zur Welle ausgerichtete Nut vorhanden, die jeweils mindestens ein Klemmelement zur Fixierung des jeweiligen in der Tasche befindlichen Magneten aufnimmt.

In D2 (DE 4423840 A1) ist ein Rotor offenbart mit Magneten in Speichenanordnung bei dem aus Blech gearbeitete Rotorscheiben mit Laschen als elastisches Fixierungsmittel zum Einsatz kommen. Dabei liegen die Blechlaschen direkt auf den Magneten auf und fixieren diese in radialer Richtung und die Rotorscheibe fixiert die Magneten in axialer Richtung.

### Offenbarung der Erfindung

Aufgabe der vorliegenden Erfindung ist es daher, einen Rotor oder Stator zu schaffen, bei dem die mechanische Beanspruchung eines in einer Aussparung des Rotors oder Stators vorgesehenen Dauermagneten möglichst gering ist, und bei dem gleichzeitig die Befestigung des Dauermagneten in der Aussparung einen Ausgleich von auftretenden Bauteil- Toleranzen und unterschiedlichem Temperaturverhalten von Rotorbauteilen sehr flexibel zulässt.

Die Aufgabe wird erfindungsgemäß gelöst mit einem Rotor oder Stator für eine elektrische Maschine gemäß dem unabhängigen Anspruch 1. Weitere Ausführungsformen der Erfindung sind in den abhängigen Ansprüchen 2 - 10 definiert.

In der Aussparung des Rotors oder Stators ist weiterhin ein elastisches Fixierungsmittel zur Fixierung des Dauermagneten in der Aussparung angeordnet. Das Fixierungsmittel ist als zusätzliches Bauteil nicht einstückig mit dem Rotorpaket beziehungsweise Lamellen des Rotorpaketes sondern separat gefertigt und in der Aussparung angeordnet. Da das Fixierungsmittel erfindungsgemäß elastisch ausgebildet ist, weist es ein definiertes Federverhalten und/oder mechanisches Klemmverhalten auf. Dadurch ist es so dimensionierbar, dass sowohl die Bauteiltoleranzen des Dauermagneten als auch sein Temperaturverhalten über die Bandbreite der im Rotor oder Stator herrschenden Temperaturen durch das Fixierungsmittel ausgleichbar sind.

Das Fixierungsmittel ist in einer bevorzugten Ausführungsform elastisch und plastisch ausgebildet, so dass es nach einer plastischen Verformung, insbesondere beim Verspannen des Dauermagneten, immer noch eine ausreichende Elastizität aufweist, um Bauteiltoleranzen und/oder das Temperaturverhalten des Dauermagneten auszugleichen.

Erfindungsgemäß ist das Fixierungsmittel eine Feder, so dass es sehr einfach und kostengünstig herstellbar ist. Das Fixierungsmittel ist beispielsweise aus einem Federblech oder einem Elastomer herstellbar. Dabei sind beispielsweise das Setzverhalten, die Shorehärte und/oder der Überdeckungsgrad des Fixierungsmittels anpassbar, so dass das Fixierungsmittel so auslegbar ist, dass die im Rotor oder Stator auftretenden Bauteiltoleranzen und Temperatureinflüsse über ihre gesamte Bandbreite abgedeckt sind und ein sehr guter Ausgleich möglich ist.

Bevorzugt wirkt das Fixierungsmittel im Rotor oder Stator so, dass der Dauermagnet in radialer Richtung, also in einer von der Drehachse strahlenförmig ausgehenden Richtung, in der Aussparung fixiert ist. Dadurch ist der Dauermagnet an der dem Fixierungsmittel gegenüberliegenden Seite im Wesentlichen spielfrei in der Aussparung angeordnet.

Erfindungsgemäß ist ebenfalls ein weiteres axial wirkendes Axialfixierungsmittel im Rotor vorgesehen.

Das Axialfixierungsmittel bewirkt, dass der Dauermagnet in axialer Richtung, also in einer Richtung parallel der Drehachse, fixiert und daher nicht entlang der Drehachse verschiebbar ist. Da die axiale Fixierung des Dauermagneten durch das Axialfixierungsmittel in der Aussparung von der radialen Fixierung durch das Fixierungsmittel unabhängig ist, ist ein Ausgleich von Bauteil- Toleranzen und Temperaturverhalten in axialer Richtung unabhängig von einem Ausgleich in radialer Richtung, und daher unterschiedlich, möglich.

Vorzugsweise wirkt das Fixierungsmittel zusätzlich in axialer Richtung, so dass zur axialen Fixierung des Dauermagneten in der Aussparung kein zusätzliches Axialfixierungsmittel vorgesehen sein muss. Und zwar ist die Elastizität des Fixierungsmittels, also bei Ausbildung des Fixierungsmittels als Feder die Federkraft des Fixierungsmittels, so auslegbar, dass der Dauermagnet durch das Fixierungsmittel in der Aussparung verklemmt wird, so dass er nicht mehr axial verschieblich und somit axial fixiert ist.

Besonders bevorzugt sind das Axialfixierungsmittel und das Fixierungsmittel lösbar im Rotor oder Stator angeordnet. Ganz besonders bevorzugt ist der Dauermagnet kraftlos in die Aussparung einfügbar. Kraftlos im Sinne der Erfindung bedeutet, dass der Dauermagnet nicht eingeklemmt oder eingepresst wird, sondern er wird so eingefügt, insbesondere eingeschoben oder eingelegt, dass er, insbesondere seine Oberfläche und/oder eine Beschichtung des Dauermagneten, dabei mechanisch im Wesentlichen nicht beansprucht wird. Dadurch wird der Dauermagnet beim Einfügen des Dauermagneten in die Aussparung nicht beschädigt. Ganz besonders bevorzugt wird der Dauermagnet erst nach dem Einfügen in die Aussparung radial und/oder axial fixiert, wobei er weiterhin bevorzugt auch durch die Fixierung nicht beschädigt wird.

Es ist weiterhin bevorzugt, das Material und/oder die geometrische Form des Fixierungsmittels so anzupassen, dass der Dauermagnet weder bei der Montage des Rotors noch im Betriebszustand, auch bei Kontakt mit dem Fixierungsmittel, nicht durch dieses beschädigt wird. Dafür wird der Kontaktbereich zwischen dem Dauermagneten und dem Fixierungsmittel beispielsweise abgerundet, so dass er möglichst klein ist, und/oder das Fixierungsmittel wird beschichtet, so dass es keine Grate aufweist.

Erfindungsgemäß berührt das Fixierungsmittel den Dauermagneten nicht unmittelbar. Dafür umfasst der Rotor oder Stator einen Abstandshalter, der zwischen dem Fixierungsmittel und dem Dauermagneten angeordnet ist. Der Abstandshalter ist vorzugsweise aus einem Kunststoff gefertigt. Er kann aber auch aus einem anderen Material gefertigt sein, das vorzugsweise eine geringere Härte als der Dauermagnet, insbesondere seine Oberfläche und/oder seine Beschichtung, aufweist, so dass sichergestellt ist, dass auch der Abstandshalter den Dauermagneten, insbesondere sowohl beim Anordnen in der Aussparung als auch unter Betriebsbedingungen, nicht beschädigt. Als weiteres Material kommt beispielsweise ein insbesondere synthetisches Gewebe in Frage.

Das Fixierungsmittel erstreckt sich bevorzugt in einer axialen Richtung des Dauermagneten, während das Axialfixierungsmittel ebenfalls bevorzugt quer zur Drehachse angeordnet ist.

In einer bevorzugten Ausführungsform umfasst der Rotor oder Stator eine um die Drehachse drehbare Drehwelle, wobei das Axialfixierungsmittel gegen axiales Verschieben entlang der Drehwelle fixiert ist, insbesondere mittels einer Haltenase. Dadurch sichert das Axialfixierungsmittel den Dauermagneten gegen axiales Verschieben entlang der Drehachse. Besonders bevorzugt weist der Dauermagnet ein erstes und ein zweites Ende auf, wobei jeweils ein Axialfixierungsmittel am ersten und am zweiten Ende des Dauermagneten angeordnet ist. Dann ist das Axialfixierungsmittel erfindungsgemäß eine Haltescheibe. In einer bevorzugten Ausführungsform ist auch das Axialfixierungsmittel federnd oder elastisch ausgebildet.

Es ist zudem bevorzugt, das Fixierungsmittel am Axialfixierungsmittel anzuordnen, so dass die Montage der Fixierungsmittel im Rotor oder Stator sehr schnell und einfach möglich ist. Außerdem ist eine Ausführungsform bevorzugt, in der auch der Abstandshalter, insbesondere im Einbauzustand, am Axialfixierungsmittel angeordnet ist. Das Fixierungsmittel ist bevorzugt am ersten oder zweiten Ende des Dauermagneten angeordnet, oder es sind ebenfalls bevorzugt zwei Fixierungsmittel am ersten und zweiten Ende des Dauermagneten angeordnet.

Ebenfalls bevorzugt ist das Axialfixierungsmittel aus einem Nichtmetall, insbesondere Kunststoff, gefertigt. Weiterhin bevorzugt ist das Fixierungsmittel aus einem Metall oder einem Kunststoff gefertigt. Die Fertigung beider Fixierungsmittel aus einem Nichtleiter, insbesondere Kunststoff, hat den Vorteil, dass keine zusätzlichen Streuverluste entstehen.

In einer bevorzugten Ausführungsform ist der Dauermagnet ein Flachmagnet und ebenfalls bevorzugt speichenartig im Rotor oder Stator angeordnet. Weiterhin ist es bevorzugt, dass der Rotor oder Stator als Lamellenpaket aus einer Vielzahl von Lamellen gefertigt ist.

In dem erfindungsgemäßen Rotor oder Stator ist die radiale sowie die axiale Fixierung des Dauermagneten in der Aussparung mit kostengünstigen Fixierungs- und Axialfixierungsmitteln sichergestellt, die einen insbesondere voneinander unabhängigen Ausgleich von Bauteiltoleranzen und Temperaturänderungen in radialer sowie axialer Richtung ermöglichen. Außerdem wird der Dauermagnet in jedem Betriebszustand des Rotors oder Stators im Vergleich zu einer herkömmlichen Befestigung des Dauermagneten in der Aussparung mittels Klemmnasen geringer mechanisch beansprucht.

Die Aufgabe wird weiterhin gelöst mit einem Motor, insbesondere einer Synchronmaschine, der einen erfindungsgemäßen Rotor oder Stator umfasst. Die Aufgabe wird weiterhin gelöst mit einer Handwerkzeugmaschine mit einem Motor, der einen erfindungsgemäßen Rotor oder Stator umfasst.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt einen Rotor für eine Synchronmaschine gemäß dem Stand der Technik,
- **Fig. 2**: zeigt schematisch einen Ausschnitt einer Ausführungsform eines erfindungsgemäßen Rotors in einem Schnittbild,
- **Fig. 3**: zeigt in **Fig. 3 (a)** und **(b)** jeweils eine Ausführungsform eines Axialfixierungsmittels und in **Fig. 3 (c)** eine Ausführungsform eines Fixierungsmittels für den Rotor der **Fig. 2****,**
- **Fig. 4**: zeigt eine weitere Ausführungsform eines Axialfixierungsmittels, wobei das Fixierungsmittel am Axialfixierungsmittel angeordnet ist, und wobei die **Fig. 4 (a)** und **(b)** verschiedene perspektivische Ansichten des Axialfixierungsmittels zeigen,
- **Fig. 5**: zeigt schematisch einen Ausschnitt eines Rotors, nicht Teil der beanspruchten Erfindung, in einem Schnittbild,
- **Fig. 6**: zeigt eine Ausführungsform eines Axialfixierungsmittels für den Rotor der **Fig. 5****,** wobei das Fixierungsmittel am Axialfixierungsmittel angeordnet ist, und wobei die **Fig. 6 (a)** und **(b)** verschiedene perspektivische Ansichten des Axialfixierungsmittels zeigen,
- **Fig. 7**: zeigt schematisch einen Rotor, nicht Teil der beanspruchten Erfindung, wobei die **Fig. 7 (a)** einen Schnitt durch den Rotor zeigt, und wobei die **Fig. 7 (b)** den Rotor in einer perspektivischen Ansicht zeigt,
- **Fig. 8**: zeigt eine Ausführungsform eines Federstrangs für den Rotor der **Fig. 7****,** wobei in der **Fig. 8 (b)** die Anordnung der Feder am Dauermagneten in einem vergrößerten Ausschnitt zeigt.

**Fig. 1** zeigt einen Rotor 1 für eine Synchronmaschine gemäß dem Stand der Technik. Der Rotor 1 ist konzentrisch um eine Drehachse 2 angeordnet und als Lamellenpaket 10 aus einer Vielzahl von Lamellen 11, 12 gefertigt. Er weist eine Vielzahl Dauermagnete 3 auf, die in Aussparungen 4 des Rotors 1 angeordnet sind. Die Dauermagnete 3 werden jeweils durch Klemmnasen 111 fixiert, die einstückig mit Lamellen 12 des Rotors 1 gefertigt sind. Sie sind in die Aussparungen 4 eingepresst, so dass sie mittels der Klemmnasen 111 sowohl axial, also in einer Richtung parallel der Drehachse 2, als auch radial, also in einer von der Drehachse 2 strahlenförmig ausgehenden Richtung, fixiert sind. Weiterhin weist der Rotor 2 eine um die Drehachse drehbare Drehwelle auf.

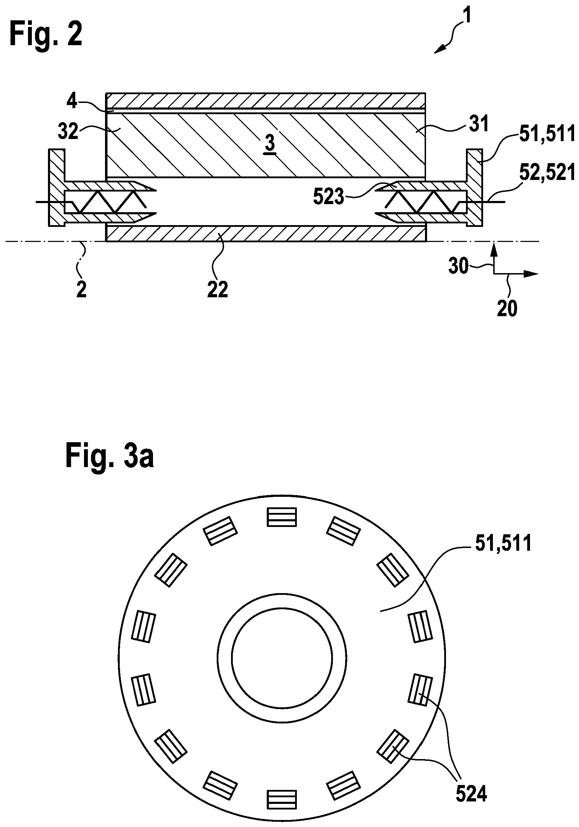

**Fig. 2** zeigt schematisch einen Ausschnitt einer Ausführungsform eines erfindungsgemäßen Rotors 1 in einem Schnittbild. Der Rotor 1 ist konzentrisch um eine Drehachse 2 angeordnet und weist eine Drehwelle 22 auf, die um die Drehachse 2 drehbar ist. Er weist eine Aussparung 4 auf, in der ein Dauermagnet 3 angeordnet ist. Der Dauermagnet 3 ist speichenartig im Rotor 1 angeordnet und erstreckt sich außerdem in axialer Richtung des Rotors 1. Die axiale Richtung 20 sowie beispielhaft eine radiale Richtung 30 sind durch Pfeile gezeigt. Er weist ein erstes Ende 31 und ein zweites Ende 32 auf und ist mittels zweier Axialfixierungsmittel 51, die jeweils am ersten Ende 31 und am zweiten Ende 32 des Dauermagneten 3 angeordnet sind, axial fixierbar. Außerdem ist der Dauermagnet 3 in dieser Ausführungsform mittels zweier Fixierungsmittel 52 radial fixierbar, die an der der Drehachse 2 zugewandten Seite des Dauermagneten 3 angeordnet sind. In diesem Schnittbild ist ein Montagezustand gezeigt, in dem das Axialfixierungsmittel sowie das Fixierungsmittel 51, 52 noch nicht in ihrem Einbauzustand positioniert sind.

Als Fixierungsmittel 52 sind hier mehrere Federn 521 vorgesehen. Außerdem sind hier zwischen den Federn 521 und dem Dauermagneten 3 jeweils Abstandshalter 523 vorgesehen, so dass die Federn 521 den Dauermagneten 3 nicht berühren und daher auch nicht beschädigen, insbesondere nicht verkratzen, können. Die Federn 521 sowie die Abstandshalter 523 sind jeweils an den Axialfixierungsmitteln 51, die hier als Haltescheiben 511 ausgebildet sind, angeordnet.

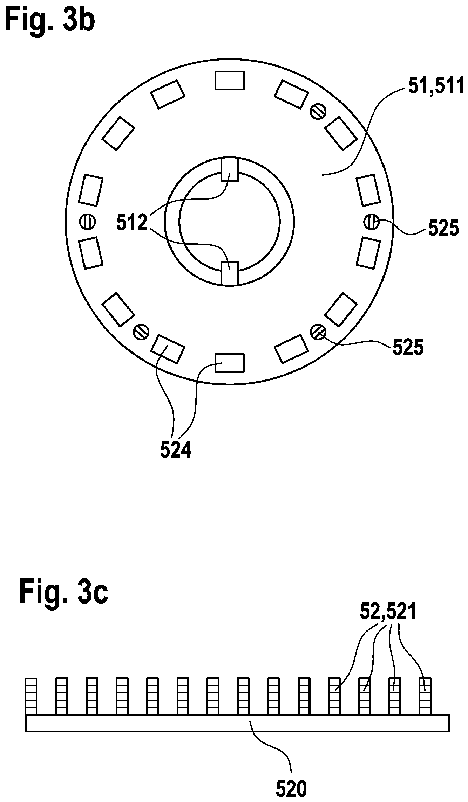

**Fig. 3** zeigt in **Fig. 3 (a)** und **(b)** jeweils eine Ausführungsform eines Axialfixierungsmittels 51 und in **Fig. 3 (c)** eine Ausführungsform eines Fixierungsmittels 52 für den Rotor 1 der **Fig. 2****.**

Die Axialfixierungsmittel 51 sind in beiden Fällen ebenfalls Haltescheiben 511, wobei die Haltescheiben 511 Ausnehmungen 524 aufweisen, durch die die auch hier als Federn 521 ausgebildeten Fixierungsmittel 52 hindurchführbar sind. In der Ausführungsform der **Fig. 3 (b)** weist die Haltescheibe 511 zudem Haltenasen 512 auf, mit der sie axial an der Drehwelle 22 fixierbar ist. Bei Anordnung jeweils einer dieser Haltescheiben 22 an dem ersten Ende 31 sowie am zweiten Ende 32 des Dauermagneten 3 ist dieser in der Aussparung 4 axial fixiert. Weiterhin sind in der Ausführungsform der Haltescheibe 511 der **Fig. 3 (b)** Stützelemente 525 gezeigt, mit denen ein Federstrang 520 (s. **Fig. 3 (c)**), der die als Fixierungsmittel 52 wirkenden Federn 521 umfasst, an der Haltescheibe 511 anordbar ist.

**Fig. 3 (c)** zeigt einen solchen an der Haltescheibe 511 anordbaren Federstrang 520. An dem Federstrang 520 ist eine Vielzahl der Federn 521 angeordnet, die jeweils als zumindest radial wirkendes Fixierungsmittel 51 vorgesehen sind. Dabei entspricht die Anzahl der Federn 521 zumindest der Anzahl der im Rotor 1 vorgesehenen Dauermagnete 3.

Zur Montage des Federstranges 520 wird dieser gebogen. Danach werden die Federn 521 durch die Ausnehmungen 524 der Haltescheibe 511 geführt und der Federstrang 520 anschließend an den Stützelementen 525 befestigt.

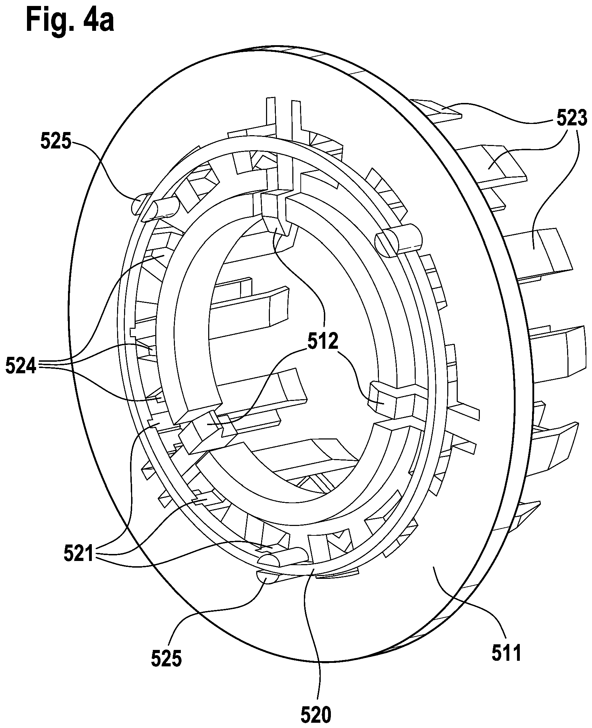

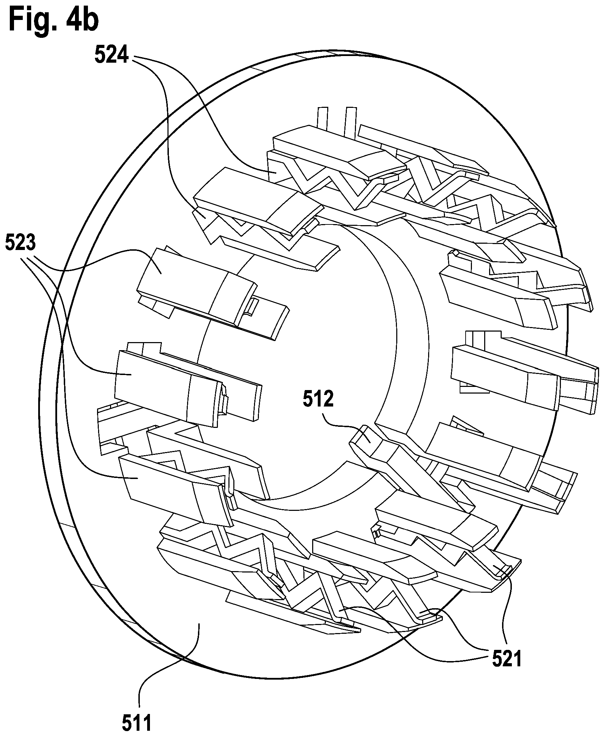

**Fig. 4** zeigt eine weitere Ausführungsform eines Axialfixierungsmittels 51, wobei das Fixierungsmittel 52 am Axialfixierungsmittel 51 angeordnet ist, und wobei die **Fig. 4 (a)** und **(b)** verschiedene perspektivische Ansichten des Axialfixierungsmittels 51 zeigen.

Analog der Ausführungsform der **Fig. 3 (b)** handelt es sich bei dem Axialfixierungsmittel 51 um eine Haltescheibe 511, wobei auch hier ein Federstrang 520, der eine Vielzahl von als Fixierungsmittel 52 vorgesehene Federn 521 aufweist, mittels Stützelementen 525 an der Haltescheibe 511 angeordnet ist. Auch in dieser Ausführungsform sind die Federn 521 durch Ausnehmungen 524 der Haltescheibe 511 geführt. Weiterhin weist die Haltescheibe 511 ebenfalls Haltenasen 512 zu ihrer axialen Fixierung an der Drehwelle 22 auf.

Im Gegensatz zur **Fig. 3 (b)** weist die Haltescheibe 511 der **Fig. 4 (a)** und **(b)** jedoch zusätzlich Abstandshalter 523 auf, die hier einstückig mit der Haltescheibe 511 gefertigt sind und verhindern, dass die Federn 521 den Dauermagneten 3 berühren.

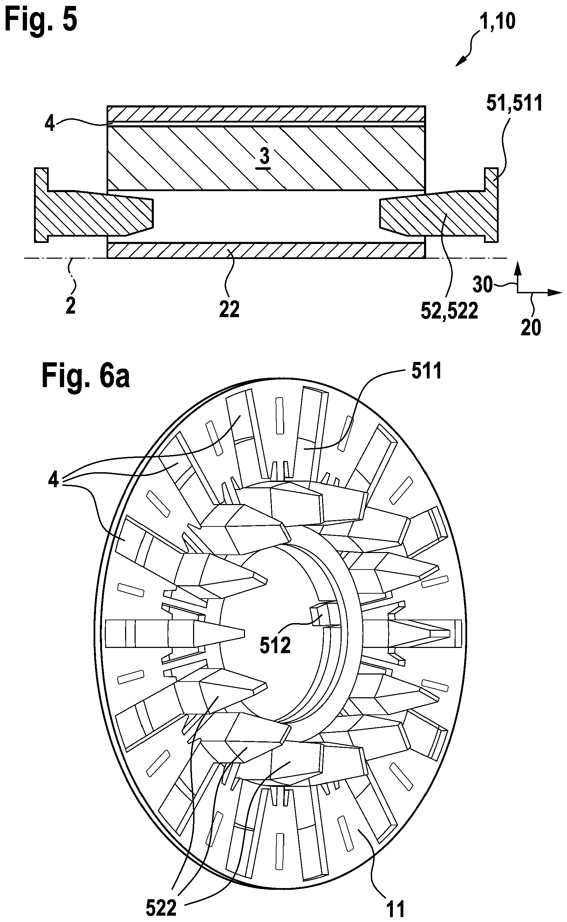

**Fig. 5** zeigt als Beispiel, nicht Teil der beanspruchten Erfindung, schematisch einen Ausschnitt eines Rotors 1 in einem Schnittbild. Analog der Ausführungsform der **Fig. 2** ist auch dieser Rotor konzentrisch um die Drehachse 2 angeordnet und weist die um die Drehachse 2 drehbare Drehwelle 22 auf. Weiterhin weist er ebenfalls die Aussparung 4 auf, in der der Dauermagnet 3 angeordnet ist, wobei der Dauermagnet 3 auch in dieser Ausführungsform mittels zweier Axialfixierungsmittel 51, die jeweils am ersten Ende 31 und am zweiten Ende 32 des Dauermagneten 3 angeordnet sind, axial fixierbar ist. Die Axialfixierungsmittel 51 sind hier ebenfalls als Haltescheiben 511 ausgebildet. Außerdem ist der Dauermagnet 3 ebenfalls mittels zweier Fixierungsmittel 52 zumindest radial fixierbar, die an der der Drehachse 2 zugewandten Seite des Dauermagneten 3 angeordnet sind. Und außerdem ist auch in diesem Schnittbild ein Montagezustand gezeigt, in dem weder die Axialfixierungsmittel 51 noch die Fixierungsmittel 52 in ihrem Einbauzustand positioniert sind.

Jedoch sind in dieser Ausführungsform die Fixierungsmittel 52 Zapfen 522. Die Zapfen 522 sind elastisch, um Bauteiltoleranzen und Temperaturschwankungen ausgleichen zu können. Außerdem sind die Zapfen 522 an den Haltescheiben 511 angeordnet.

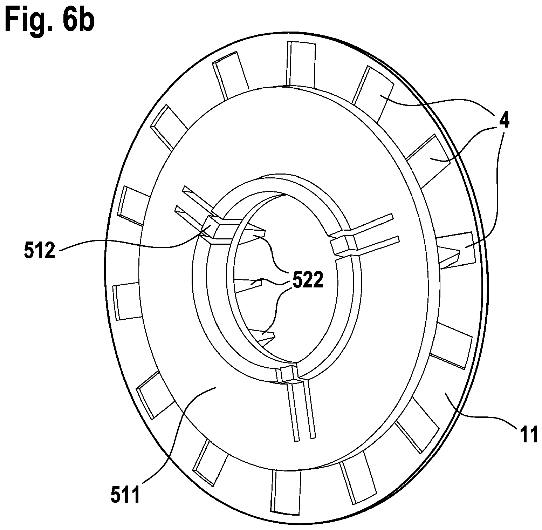

**Fig. 6** zeigt eine Ausführungsform eines Axialfixierungsmittels 51 für den Rotor 1 der **Fig. 5****,** wobei das Fixierungsmittel 52 am Axialfixierungsmittel 51 angeordnet ist, und wobei die **Fig. 6 (a)** und **(b)** verschiedene perspektivische Ansichten des Axialfixierungsmittels 51 zeigen.

Das Axialfixierungsmittel 51 ist eine Haltescheibe 511, an der analog der **Fig. 5** eine Vielzahl von Zapfen 522, die als Fixierungsmittel 52 zumindest in radialer Richtung wirken, angeordnet sind. Die Zapfen 522 sind in der hier gezeigten Ausführungsform einstückig mit der Haltescheibe 511 ausgebildet. Die Haltescheibe 511 weist zu ihrer axialen Fixierung an der Drehwelle 22 Haltenasen 512 auf.

Außerdem zeigt die **Fig. 6** eine Lamelle 11 eines als Lamellenpaket 10 gefertigten Rotors 1. Da die Dauermagnete 3 in dieser **Fig. 6** nicht gezeigt sind, sind hier die Aussparungen 4, in die die Dauermagnete 3 anordbar sind, sichtbar. Daher ist hier erkennbar, dass die Anzahl der Zapfen 522 der Anzahl der Dauermagnete 3, die im Rotor 1 vorgesehen sind, entspricht.

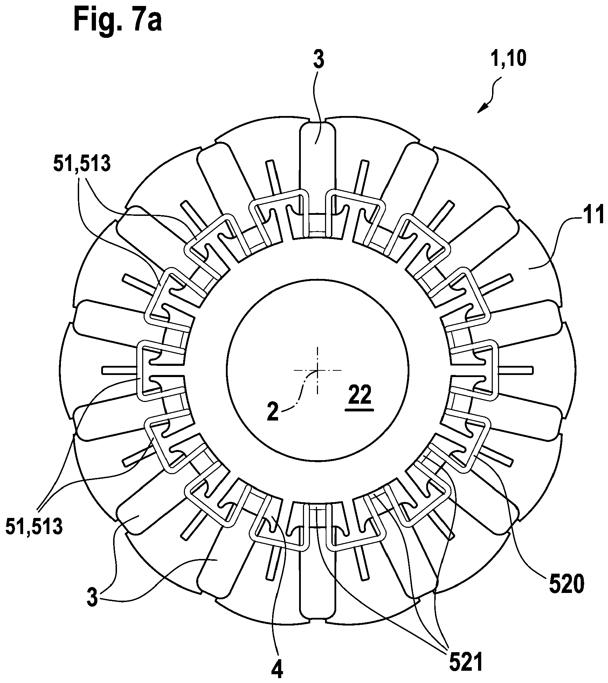

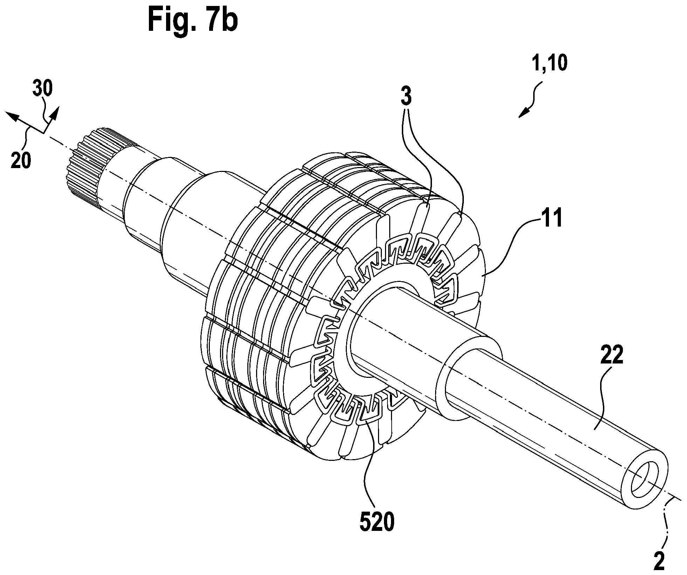

**Fig. 7** zeigt schematisch einen Rotor 1 als weiteres Beispiel, nicht Teil der beanspruchten Erfindung, wobei die **Fig. 7 (a)** einen Schnitt durch den Rotor 1 zeigt, und wobei die **Fig. 7 (b)** den Rotor 1 in einer perspektivischen Ansicht zeigt. Analog den **Fig. 2** und **5** ist der Rotor 1 konzentrisch um die Drehachse 2 angeordnet und weist die um die Drehachse 2 drehbare Drehwelle 22 auf. Weiterhin weist er eine Vielzahl von Aussparungen 4 auf, in denen jeweils die Dauermagnete 3 angeordnet sind, wobei die Dauermagnete 3 ebenfalls mittels einer Vielzahl Fixierungsmittel 52 zumindest radial fixiert sind, die an der der Drehachse 2 zugewandten Seite des Dauermagneten 3 angeordnet sind.

Jedoch zeigt dieses Beispiel den Rotor 1 im Einbauzustand, und der hier dargestellte Rotor 1 ist als Lamellenpaket 10 aus einer Vielzahl von Lamellen 11 gefertigt.

Und außerdem weist der hier gezeigte Rotor 1 im Gegensatz zu den bisher gezeigten Ausführungsformen als Axialfixierungsmittel 51 Spangen 513 auf, die einstückig mit den Fixierungsmitteln 52, welche hier als Federn 521 ausgebildet sind, gefertigt sind. In dieser Ausführungsform sind das Axialfixierungsmittel 51 sowie das Fixierungsmittel 52 daher als Federstrang 520 aus einem einzigen Draht herstellbar.

Der hier dargestellt Federstrang 520 weist eine vorteilhafte geometrische Form auf, da er in den Kontaktbereichen zwischen dem Dauermagneten 3 und den Federn 521 sowie in den Kontaktbereichen zwischen dem Dauermagneten 3 und den Spangen 513 so abgerundet ist, dass dieser möglichst klein ist. Außerdem weist er durch seine abgerundete Form in den Kontaktbereichen keine Grate auf. Zudem ist der Federstrang 520 bevorzugt aus einem Material gefertigt, welches weicher als das Material ist, aus dem der Dauermagnet 3 gefertigt ist, da er unmittelbar am Dauermagneten anliegt, und/oder der Federstrang 520 ist zusätzlich mit einem solchen Material beschichtet. Dadurch wird verhindert, dass der Dauermagnet 3 durch den Federstrang 520 beschädigt wird.

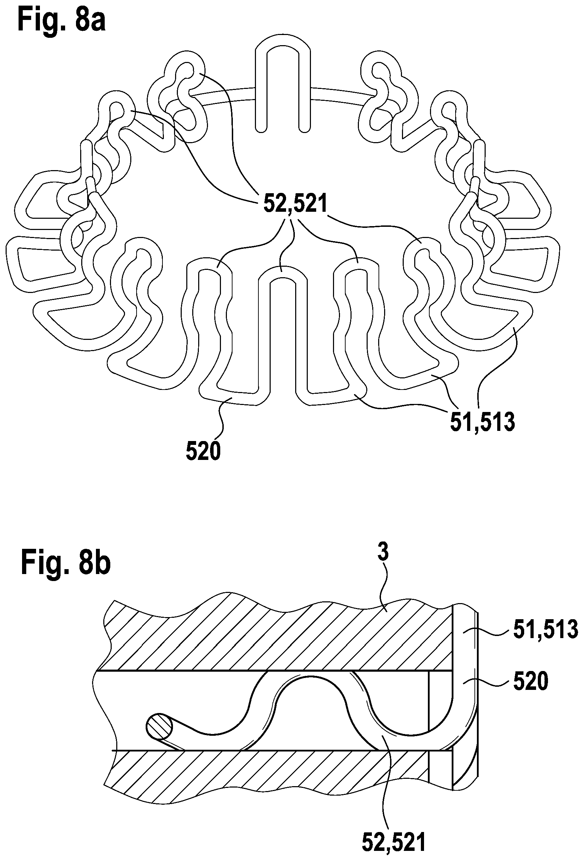

**Fig. 8 (a), (b)** zeigt eine Ausführungsform eines Federstrangs 520 für den Rotor 1 der **Fig. 7****,** wobei die **Fig. 8 (b)** die Anordnung der Feder 521 am Dauermagneten 3 in einem vergrößerten Ausschnitt zeigt. Sichtbar sind die als Axialfixierungsmittel 51 vorgesehenen Spangen 513 und die als Fixierungsmittel 52 vorgesehenen Federn 521.

In den Ausführungsformen der **Fig. 2 - 8** sind die als Fixierungsmittel 52 wirkenden Federn 521 beziehungsweise Zapfen 522 einerseits so dimensionierbar, dass sie lediglich eine Fixierung in radialer Richtung 30 des Rotors 41 bewirken. Sie sind aber andererseits auch so dimensionierbar, dass sie sowohl eine Fixierung in radialer Richtung 30 als auch eine Fixierung in axialer Richtung 20 des Rotors 1 bewirken.

Weiterhin sind die hier als Fixierungsmittel 52 wirkenden Federn 521 beziehungsweise Zapfen 522 so dimensionierbar, dass zur Fixierung des Dauermagneten 3 lediglich ein Fixierungsmittel 52 am linken oder rechten Ende 31, 32 des Dauermagneten 3 ausreicht.

Ein erfindungsgemäßer Rotor 1 hat den Vorteil, dass die insbesondere voneinander unabhängige axiale Fixierung des Dauermagneten 3 in der Aussparung 4 von der radialen Fixierung des Dauermagneten 3 in der Aussparung 4 einen sehr flexiblen Ausgleich von Bauteiltoleranzen und Temperaturverhalten der Bauteile ermöglicht. Weiterhin ist der Dauermagnet 3 kraftlos in die Aussparung 4 einfügbar. Dadurch wird er, insbesondere seine Beschichtung, beispielsweise aus Epoxid oder Ni-Cu-Ni, beim Einfügen nicht beschädigt. Weiterhin sind das Fixierungsmittel 52 und das Axialfixierungsmittel 51 so vorsehbar, dass der Dauermagnet 3 auch unter Betriebsbedingungen nicht durch die Fixierungen 51, 52 beschädigt wird.

Die gezeigte Befestigung des Dauermagneten 3 in einem erfindungsgemäßen Rotor 1 ist in analoger Weise auch in einem Stator (nicht gezeigt) möglich.

## Patentansprüche

1. Rotor (1) oder Stator für eine elektrische Maschine, der konzentrisch um eine Drehachse (2) angeordnet ist, mit einem Dauermagneten (3), der in einer Aussparung (4) des Rotors oder Stators (1) angeordnet ist und der zumindest ein elastisches Fixierungsmittel (52) zur Fixierung des Dauermagneten (3) aufweist, welches in der Aussparung (4) angeordnet ist, wobei das Fixierungsmittel eine Feder (521) ist,
**dadurch gekennzeichnet, dass**
zwischen den Federn (521) und dem Dauermagneten (3) jeweils ein Abstandshalter (523) vorgesehen ist, so dass die Federn (521) den Dauermagneten nicht berühren,
wobei die Federn (521) sowie die Abstandshalter (523) jeweils an als Haltescheiben (511) ausgebildeten Axialfixierungsmitteln (51) angeordnet sind, und der Rotor oder Stator diese Axialfixierungsmittel (51) aufweist, welche den Dauermagneten (3) in der axialen Richtung in der Aussparung (4) fixieren, wobei die Axialfixierungsmittel (51) als Haltescheiben (511) ausgeführt sind.

2. Rotor (1) oder Stator nach Anspruch 1, **dadurch gekennzeichnet, dass** das Fixierungsmittel (52) den Dauermagneten (3) in radialer Richtung in der Aussparung (4) fixiert.

3. Rotor (1) oder Stator nach einem der vorherigen Ansprüche, **dadurch gekennzeichnet, dass** das Fixierungsmittel (52) den Dauermagneten (3) auch in axialer Richtung in der Aussparung (4) fixiert.

4. Rotor (1) oder Stator nach einem der vorherigen Ansprüche, **dadurch gekennzeichnet, dass** sich das Fixierungsmittel (52) in einer axialen Richtung (20) des Dauermagneten erstreckt.

5. Rotor (1) oder Stator nach einem der vorherigen Ansprüche, **dadurch gekennzeichnet, dass** das Axialfixierungsmittel (51) quer zur Drehachse (2) angeordnet ist.

6. Rotor (1) oder Stator nach einem der vorherigen Ansprüche, **dadurch gekennzeichnet, dass** der Rotor (1) oder Stator eine um die Drehachse (2) drehbare Drehwelle (22) umfasst, wobei das Axialfixierungsmittel (51) gegen axiale Bewegung auf der Drehwelle (22) fixiert ist.

7. Rotor (1) oder Stator nach einem der vorherigen Ansprüche, **dadurch gekennzeichnet, dass** das Axialfixierungsmittel (51) aus Kunststoff gefertigt ist, und dass das Fixierungsmittel (52) aus einem Metall oder einem Kunststoff gefertigt ist.

8. Rotor (1) oder Stator nach einem der vorherigen Ansprüche, **dadurch gekennzeichnet, dass** der Dauermagnet (3) speichenförmig im Rotor (1) oder Stator angeordnet ist.

9. Motor, insbesondere Synchronmaschine, mit einem Rotor (1) oder Stator nach einem der vorherigen Ansprüche.

10. Handwerkzeugmaschine mit einem Motor, der einen Rotor (1) oder Stator nach einem der Ansprüche 1 - 8 umfasst.

## Claims

1. Rotor (1) or stator for an electric machine, which rotor (1) or stator is arranged concentrically about a rotational axis (2), having a permanent magnet (3) which is arranged in a cut-out (4) of the rotor or stator (1) and which has at least one elastic fixing means (52) for fixing the permanent magnet (3), which elastic fixing means (52) is arranged in the cut-out (4), the fixing means being a spring (521), **characterized in that** in each case one spacer element (523) is provided between the springs (521) and the permanent magnet (3), with the result that the springs (521) do not touch the permanent magnet, the springs (521) and the spacer elements (523) being arranged in each case on axial fixing means (51) which are configured as retaining washers (511), and the rotor or stator having the said axial fixing means (51) which fix the permanent magnet (3) in the cut-out (4) in the axial direction, the axial fixing means (51) being configured as retaining washers (511).

2. Rotor (1) or stator according to Claim 1, **characterized in that** the fixing means (52) fixes the permanent magnet (3) in the cut-out (4) in the radial direction.

3. Rotor (1) or stator according to either of the preceding claims, **characterized in that** the fixing means (52) also fixes the permanent magnet (3) in the cut-out (4) in the axial direction.

4. Rotor (1) or stator according to one of the preceding claims, **characterized in that** the fixing means (52) extends in an axial direction (20) of the permanent magnet.

5. Rotor (1) or stator according to one of the preceding claims, **characterized in that** the axial fixing means (51) is arranged transversely with respect to the rotational axis (2).

6. Rotor (1) or stator according to one of the preceding claims, **characterized in that** the rotor (1) or stator comprises a rotary shaft (22) which can be rotated about the rotational axis (2), the axial fixing means (51) being fixed against axial movement on the rotary shaft (22).

7. Rotor (1) or stator according to one of the preceding claims, **characterized in that** the axial fixing means (51) is manufactured from plastic, and **in that** the fixing means (52) is manufactured from a metal or a plastic.

8. Rotor (1) or stator according to one of the preceding claims, **characterized in that** the permanent magnet (3) is arranged in a spoke-shaped manner in the rotor (1) or stator.

9. Motor, in particular synchronous machine, having a rotor (1) or stator according to one of the preceding claims.

10. Hand-held power tool having a motor which comprises a rotor (1) or stator according to one of Claims 1 to 8.

## Revendications

1. Rotor (1) ou stator pour une machine électrique, qui est disposé de façon concentrique autour d'un axe de rotation (2), avec un aimant permanent (3), qui est disposé dans un évidement (4) du rotor ou du stator (1) et qui présente au moins un moyen de fixation élastique (52) pour la fixation de l'aimant permanent (3), qui est disposé dans l'évidement (4), dans lequel le moyen de fixation est un ressort (521),
**caractérisé en ce qu'**il est prévu entre les ressorts (521) et l'aimant permanent (3) chaque fois un élément d'écartement (523), de telle manière que les ressorts (521) ne touchent pas l'aimant permanent, dans lequel les ressorts (521) ainsi que les éléments d'écartement (523) sont respectivement disposés sur des moyens de fixation axiaux (51) réalisés sous forme de disques de maintien (511), et le rotor ou le stator présente ces moyens de fixation axiaux (51), qui fixent l'aimant permanent (3) dans la direction axiale dans l'évidement (4), dans lequel les moyens de fixation axiaux (51) sont réalisés sous forme de disques de maintien (511).

2. Rotor (1) ou stator selon la revendication 1, **caractérisé en ce que** le moyen de fixation (52) fixe l'aimant permanent (3) en direction radiale dans l'évidement (4).

3. Rotor (1) ou stator selon l'une quelconque des revendications précédentes, **caractérisé en ce que** le moyen de fixation (52) fixe l'aimant permanent (3) également en direction axiale dans l'évidement (4).

4. Rotor (1) ou stator selon l'une quelconque des revendications précédentes, **caractérisé en ce que** le moyen de fixation (52) s'étend dans une direction axiale (20) de l'aimant permanent.

5. Rotor (1) ou stator selon l'une quelconque des revendications précédentes, **caractérisé en ce que** le moyen de fixation axial (51) est disposé transversalement à l'axe de rotation (2).

6. Rotor (1) ou stator selon l'une quelconque des revendications précédentes, **caractérisé en ce que** le rotor (1) ou le stator comprend un arbre rotatif (22) pouvant tourner autour de l'axe de rotation (2), dans lequel le moyen de fixation axial (51) est fixé contre un mouvement axial sur l'arbre rotatif (22).

7. Rotor (1) ou stator selon l'une quelconque des revendications précédentes, **caractérisé en ce que** le moyen de fixation axial (51) est fabriqué en matière synthétique, et **en ce que** le moyen de fixation (52) est fabriqué en un métal ou en une matière synthétique.

8. Rotor (1) ou stator selon l'une quelconque des revendications précédentes, **caractérisé en ce que** l'aimant permanent (3) est disposé en forme de rayon dans le rotor (1) ou le stator.

9. Moteur, en particulier machine synchrone, avec un rotor (1) ou un stator selon l'une quelconque des revendications précédentes.

10. Machine-outil manuelle avec un moteur, qui comprend un rotor (1) ou un stator selon l'une quelconque des revendications 1 à 8.
